# EUROPÄISCHE PATENTANMELDUNG

(11) **EP 1 884 382 A1**
(43) Veröffentlichungstag der Anmeldung: **06.02.2008**
(21) Anmeldenummer: 07014260.9
(22) Anmeldetag: 20.07.2007
(51) Int. Cl.: B60G 21/055

(54) **Schwingungsdämpfer mit einer Halterung**

(30) Priorität: 04.08.2006 DE 102006036506
(71) Anmelder: ZF Friedrichshafen AG, 88038 Friedrichshafen (DE)
(72) Erfinder: Böttger, Christian, 96158 Frensdorf (DE); Renn, Josef, 97337 Dettelbach (DE); Pagel, Jörg, 97532 Hoppachshof (DE); Stretz, Klaus, 97437 Hassfurt (DE)

(57) **Zusammenfassung**

Schwingungsdämpfer (1), umfassend einen äußeren Zylinder (5), an dem auf einer Mantelfläche (10) eine Halterung (3) befestigt ist, wobei die Halterung (3) eine Durchgangsöffnung (27) für ein bolzenförmiges Befestigungsmittel (9) aufweist. Die Halterung (3) erstreckt sich in Umfangsrichtung zur Mantelfläche (19) des Zylinders (5) und weist eine bezogen auf den Zylinder (5) radiale Ausformung (21) auf, die mit dem Zylinder (5) eine Aufnahme (37) für eine Anschlagfläche (35) des Befestigungsmittels (9) bildet, wobei die Anschlagfläche (35) in Achsrichtung des Befestigungsmittels (9) an der Halterung (3) anliegt.

## Beschreibung

Die Erfindung betrifft einen Schwingungsdämpfer mit einer Halterung gemäß dem Oberbegriff von Patentanspruch 1.

Aus der DE 42 01 837 C1 ist ein Schwingungsdämpfer bekannt, der einen Federteller aufweist, an dem eine Befestigungsöffnung für einen Stabilisator ausgeführt ist. Der Federteller verfügt über eine Gitterstruktur, die zwar einerseits einen Gewichtsvorteil erwarten lässt, jedoch auf der Kostenseite erhebliche Nachteile verzeichnet. Des Weiteren besteht ein vergleichsweise großer radialer Abstand zwischen der Befestigungsöffnung und der Anbindung des Federtellers am Schwingungsdämpfer. Folglich wird über den Stabilisator ein großes Biegemoment in den Schwingungsdämpfer eingeleitet.

Die DE 10 2004 054 701 A1 beschreibt einen Schwingungsdämpfer mit einer Stabilisatorhalterung, die beispielsweise von einer angeschweißten Gewindehülse gebildet wird. Der große Vorteil dieser Konstruktion im Vergleich zur DE 42 01 837 C1 besteht vor allem darin, dass der Hebelarm zwischen dem Stabilisator und dem Anbindungspunkt am Schwingungsdämpfer deutlich kürzer ist.

Die DE 198 33 008 C1 betrifft einen Zuganschlagbegrenzungshalter, der an einem äußeren Zylinder eines Schwingungsdämpfers angeschweißt ist. Der Zuganschlagbegrenzungshalter verfügt über seitliche Verlängerungen, in denen Durchgangsöffnungen für die Befestigung eines Stabilisators ausgeführt sind. Um Gleichteile für eine links- und rechtsseitige Montage des Schwingungsdämpfers zu erreichen, verfügt der Zuganschlagbegrenzungshalter über zwei seitliche Verlängerungen. Damit ist ein Material- und Bauraumnachteil verbunden.

Aufgabe der vorliegenden Erfindung ist es, an einem Schwingungsdämpfer eine Halterung für einen Stabilisator zu realisieren, die einen möglichst kurzen Hebelarm zwischen dem Stabilisator und dem Schwingungsdämpfer mit sich bringt und dabei kostengünstig herstellbar ist.

Erfindungsgemäß wird die Aufgabe dadurch gelöst, dass sich die Halterung in Umfangsrichtung zur Mantelfläche des Zylinders erstreckt und eine bezogen auf den Zylinder radiale Ausformung aufweist, die mit dem Zylinder eine Aufnahme für eine Anschlagfläche des Befestigungsmittels bildet, wobei die Anschlagfläche in Achsrichtung des Befestigungsmittels an der Halterung anliegt.

Der Vorteil der Erfindung besteht darin, dass das Befestigungsmittel einen sehr kurzen Hebelarm aufweisen kann. Die Aufnahme erstreckt sich nur auf die Wandstärke der Anschlagfläche ggf. mit einem Zuschlag für die Montagebewegung. Die Anschlagfläche kann z. B. Teil eines Schraubenkopfs sein. An dem Zylinder des Schwingungsdämpfers müssen vorteilhafterweise keine besonderen konstruktiven Maßnahmen durchgeführt werden.

Bei einer ersten Ausführungsform ist die Durchgangsöffnung bis zu einer Seitenkante der Halterung als ein Schlitz ausgeführt und das Befestigungsmittel ist von dieser Seitenkante in die Durchgangsöffnung einschiebbar. Man benötigt nur einen sehr kleinen Bauraum zur Montage.

Dabei ist vorgesehen, dass das Befestigungsmittel durch eine Sicherungseinrichtung gegen eine Lösebewegung in Schlitzrichtung gesichert.

Das Sicherungselement selbst soll ebenfalls sehr einfach ohne Spezialwerkzeug montierbar sein. Dazu weist die Sicherungseinrichtung eine Durchgangsöffnung für das Befestigungsmittel aufweist und ist an der Halterung derart befestigt, dass die Demontagebewegung aus dem Schlitz der Halterung von der Wandung Durchgangsöffnung der Sicherungseinrichtung blockiert ist.

Dabei besteht die Sicherungseinrichtung aus einem Scheibenelement, das mit der Halterung in Eingriff steht. Das Scheibenelement weist zumindest eine Anschlagkante auf, die bei einer Bewegung in Demontagerichtung des Befestigungselements an der Halterung anliegt. Das Scheibenelement liegt einfach auf der radialen Ausformung der Halterung an.

Das Befestigungsmittel verfügt bevorzugt über einen Gewindebolzen. Damit man den Gewindebolzen beim Aufschrauben einer Gewindemutter nicht mit einem Werkzeug halten muss, weist das Befestigungsmittel ein Verdrehsicherungsprofil auf, das in eine Führung der Halterung eingreift.

Bei einer Alternativvariante weist der Schlitz bezogen auf eine Belastungsrichtung des Befestigungsmittels einen bogenförmigen Verlauf auf. Dadurch besteht die Möglichkeit, dass die Wandung des Schlitzes eine durch die Belastung auf das Befestigungsmittel wirksame Demontagekraft parallel zur Mantelfläche des Zylinders abstützt und dadurch das Befestigungsmittel gesichert ist.

Des weiteren besteht die Möglichkeit, dass die Durchgangsöffnung ein von der Kreisform abweichendes Profil aufweist und die Anschlagfläche eine Begrenzungskontur aufweist, die durch die Durchgangsöffnung in die Aufnahme einführbar und durch eine Verdrehbewegung um die Längsachse des Befestigungselements an der Halterung anlegbar ist.

Anhand der folgenden Figurenbeschreibung soll die Erfindung näher erläutert werden.

Es zeigt:
- Fig. 1: Ausschnittdarstellung von einem Schwingungsdämpfer mit Halterung
- Fig. 2: Draufsicht zur Fig. 1
- Fig. 3: Halterung als Einzelteil
- Fig. 4: Halterung mit Befestigungsmittel
- Fig. 5 - 7: Halterung mit einem bogenförmig verlaufenden Schlitz

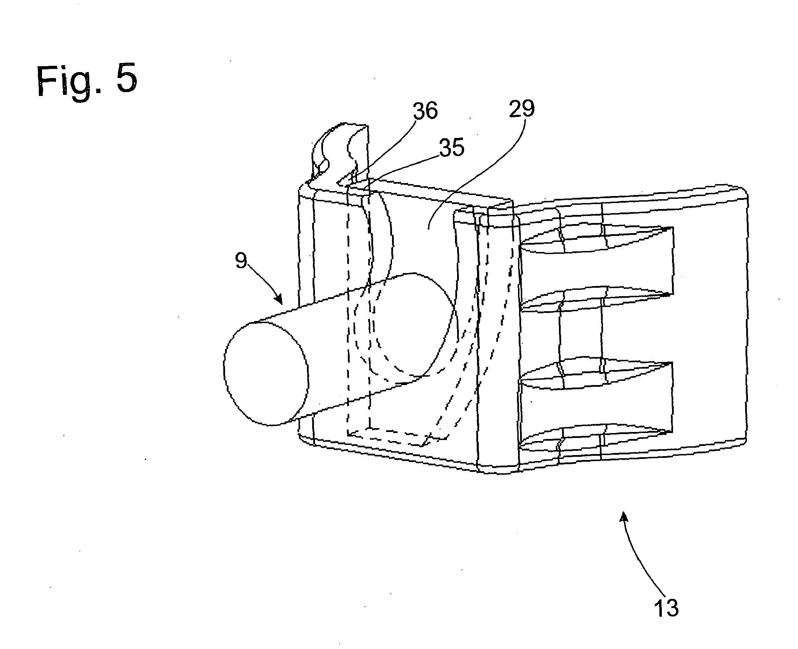

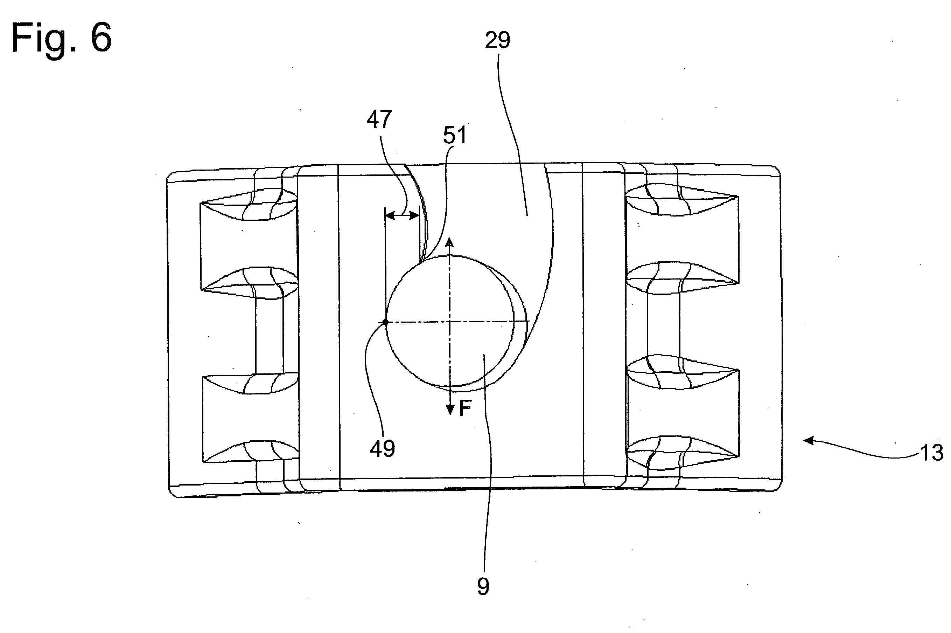

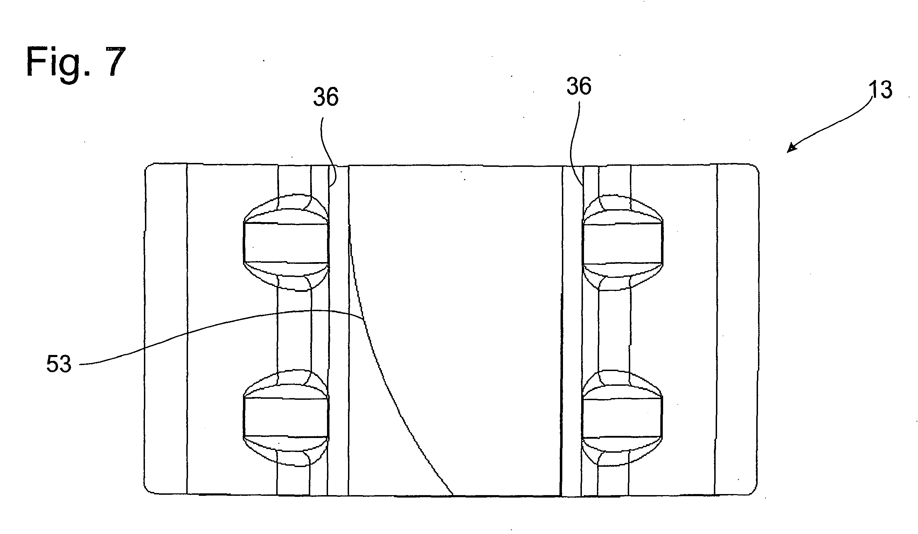

(Fig. 5: perspektivische Darstellung; Fig. 6: Vorderseite; Fig. 7: Rückseite)

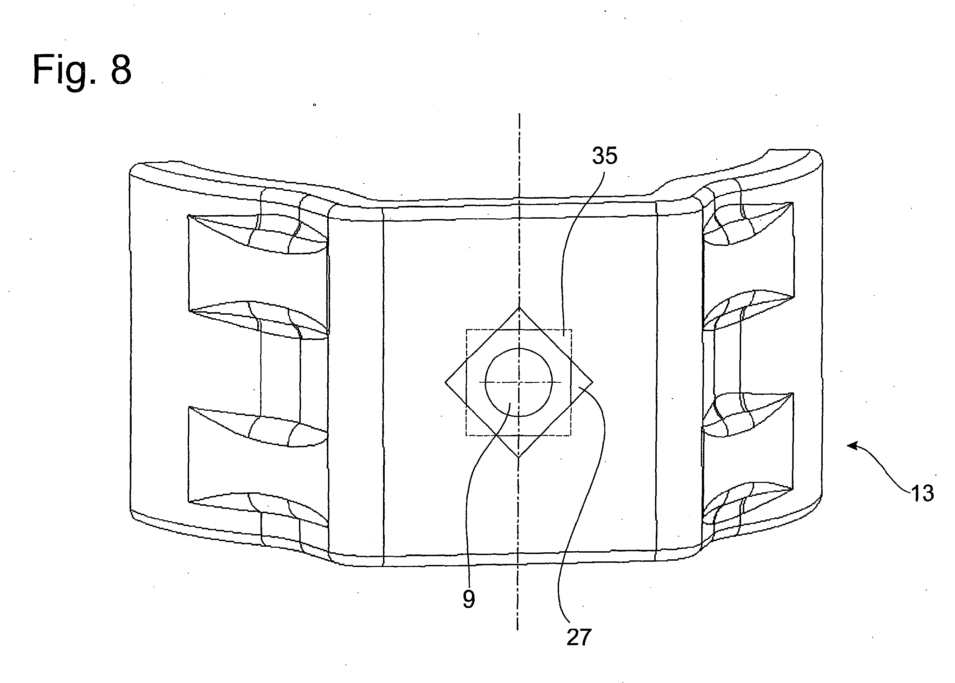

- Fig. 8: Halterung mit einer Verriegelung des Befestigungsmittels

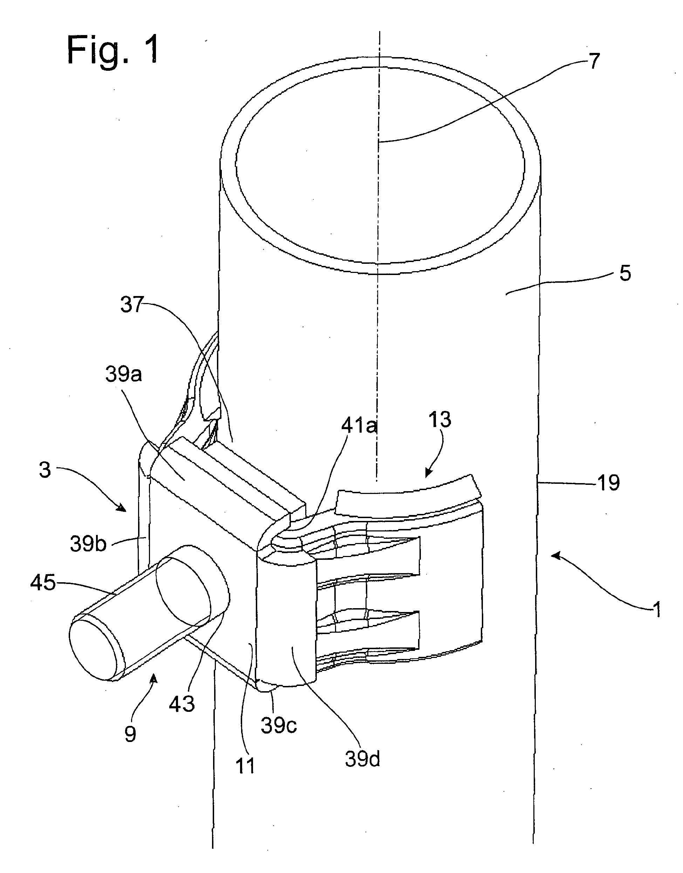

Die Figur 1 zeigt einen Ausschnitt von einem Schwingungsdämpfer 1 beliebiger Bauart, wobei sich der Ausschnitt auf eine Halterung 3 und einen äußeren Zylinder 5 beschränkt. Die Halterung 3 dient in einem Kraftfahrzeug bevorzugt zum Anschluss eines Stabilisators, der eine Krafteinleitung im Wesentlichen parallel zur Längsachse des Zylinders 5 bewirkt.

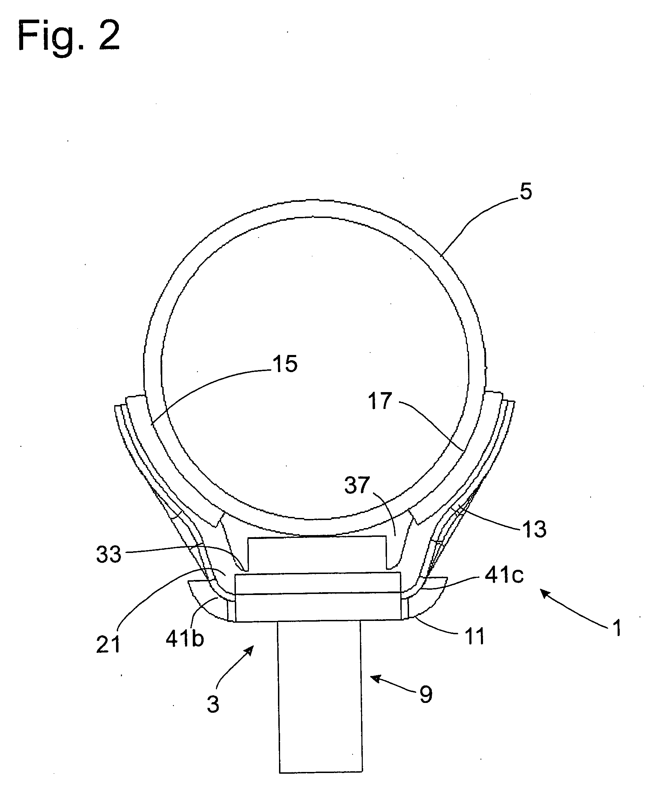

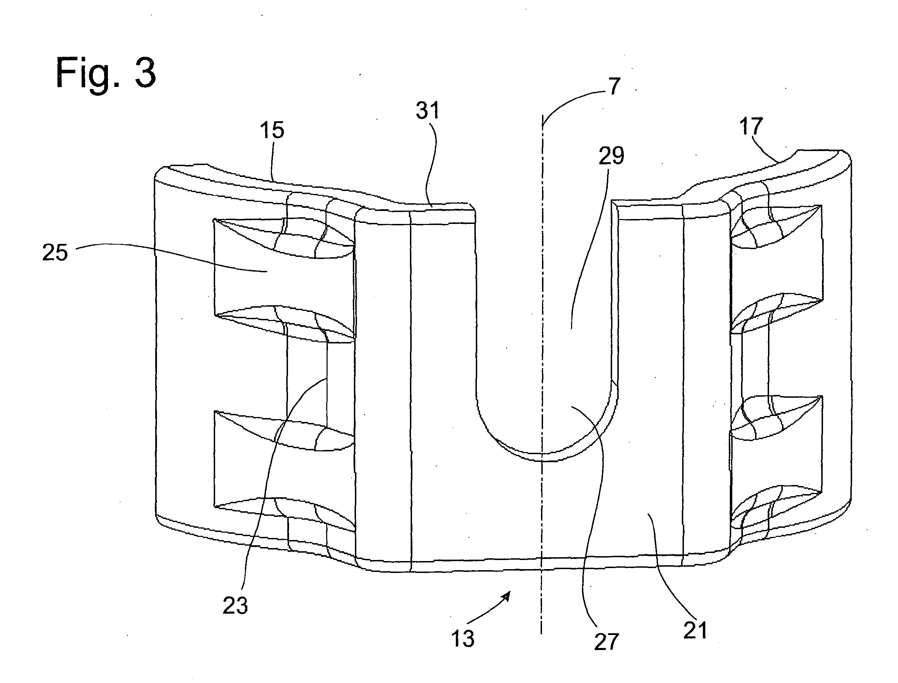

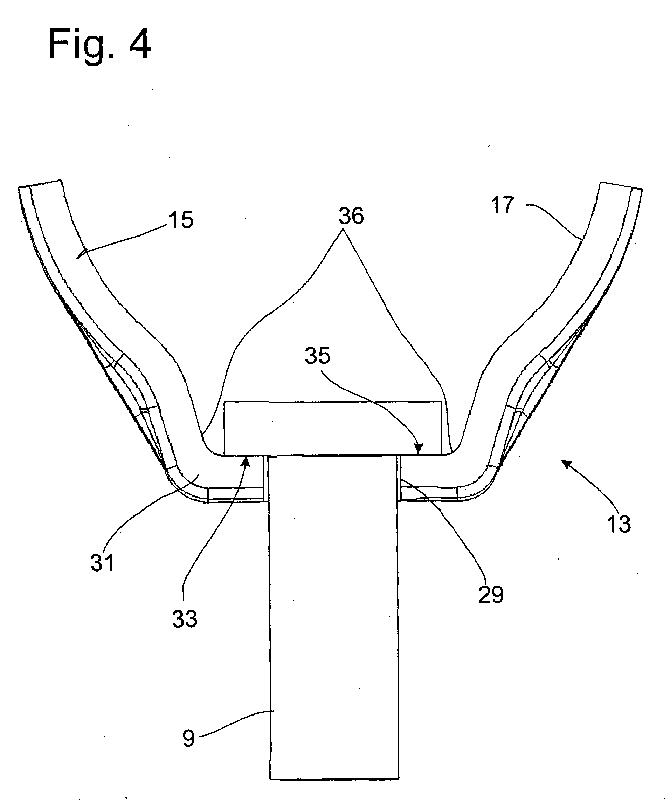

Die Zusammenschau der Figuren 1 und 2 verdeutlicht, dass die Halterung 3 ein bolzenförmiges Befestigungsmittel 9 und ein Sicherungselement 11 umfasst. Die Fig. 3 zeigt eine Anschlusslasche 13 als Basis der Halterung 3. Die Anschlusslasche ist symmetrisch zur Längsachse 7 aufgebaut und verfügt über zwei Kontaktflächen 15; 17 zum Zylinder 5, wobei die Kontaktflächen im Konturenverlauf einer äußeren Mantelfläche 19 des Zylinders 5 angepasst sind. Bezogen auf die Mantelfläche 19 des Zylinders 5 weist die Anschlusslasche 13 eine radiale Ausformung 21 auf, die im Übergangsbereich 23 zu den Kontaktflächen ggf. durch Sicken 25 versteift ist. In dieser Ausformung 21 ist eine Durchgangsöffnung27 für das Befestigungsmittel 9 ausgeführt, wobei die Durchgangsöffnung in einen Schlitz 29 bis zu einer Seitenkante 31 der Anschlusslasche 13 übergeht. In Richtung der äußeren Mantelfläche 19 verfügt die Ausformung 21 über eine Vorspannfläche 33 für das bolzenähnliche Befestigungsmittel 9, das ausgehend von der Seitenkante 31 über den Schlitz 29 in einer Ebene parallel zur äußeren Mantelfläche des Zylinders 5 einführbar ist (Fig. 4)

Bei der Fertigung des Schwingungsdämpfers 1 wird die Anschlusslasche 13 an den Rändern der Kontaktfläche 15; 17 mit der äußeren Mantelfläche 19 des Zylinders verscheißt. Danach erfolgt der Oberflächenschutz des Zylinders 5. Im weiteren Ablauf wird das bolzenähnliche Befestigungsmittel 9 mit einer Anschlagfläche 35 in eine von dem Zylinder 5 und der radialen Ausformung 21 der Anschlusslasche 13 gebildeten Aufnahme 37 geschoben, wobei die Anschlagfläche 35 des Befestigungsmittels 9 an der Vorspannfläche 33 der Anschlusslasche 13 anliegt. Wie in der Fig. 1 erkennbar ist, verfügt die Anschlagfläche 35 über ein rechteckiges Profil, das in eine Parallelführung 36 am Übergang zwischen der radialen Ausformung 21 und den Kontaktflächen 15; 17 eingreift und damit ein Verdrehsicherungsprofil darstellt.

Damit das bolzenähnliche Befestigungsmittel 9 aufgrund der Krafteinleitung nicht aus dem Schlitz 29 geschoben werden kann, ist dieses gegen die Lösebewegung gesichert. Dafür wird das scheibenförmiges Sicherungselement 11 verwendet, das in dieser Ausführung vier abgewinkelte Laschen 39a-39d mit Anschlagkanten 41 a-41 c aufweist, die mit der radialen Ausformung 21 eine Formschlussverbindung eingehen. In dem Sicherungselement 11 ist eine kreisrunde Durchgangsöffnung 43 ausgeführt, deren Wandung eine Demontagebewegung blockiert. Das scheibenförmige Sicherungselement 11 wird einfach auf das bolzenförmige Befestigungsmittel 9 gefädelt und liegt dann an der radialen Ausformung 21 der Anschlusslasche 13 an. Wenn auf ein Befestigungsgewinde 45 des Befestigungsmittels ein nicht dargestelltes Befestigungslager des Stabilisators geschraubt wird, ist das Sicherungselement 11 selbst in dieser dargestellten Position fixiert.

In der Variante nach den Figuren 5 bis 7 kommt eine Anschlusslasche 13 zur Anwendung, deren Schlitz 29 bezogen auf eine Belastungsrichtung es Befestigungsmittels, dargestellt durch die Wirklinie F, (Fig. 6) einen bogenförmigen Verlauf aufweist. Ein Wandungsteil 47, bestimmt durch den radialen Versatz zwischen einem Kontaktpunkt 49 im Bereich der größten Erstreckung und einem Kontaktpunkt 51 mit der kleinsten Erstreckung an dem Schlitz quer zur Wirklinie F dient als Sicherungsfläche gegen eine ungewollte Demontagebewegung. Damit die Anschlagfläche 35 des Befestigungsmittels unter Belastung keine Verdrehbewegung ausführen kann, kommt ebenfalls ein Verdrehsicherungsprofil zur Anwendung. Für eine bestimmungsgemäße Demontage kann das Befestigungsmittel aufgrund einer der Führung abgewandten Seitenfläche 53 dem Schlitzverlauf 29 folgenden bewegt werden. Ein zusätzliches Sicherungselement, wie in den Fig. 1 und 2 dargestellt, ist nicht notwendig.

Die Fig. 8 zeigt eine weitere Lösung einer Halterung 3, bei der kein Sicherungselement 11 notwendig ist. In der Anschlusslasche 13 ist die Durchgangsöffnung 27 mit einem von der Kreisform abweichenden Profil ausgeführt. Die Anschlagfläche des Befestigungsmittels lässt sich durch die Durchgangsöffnung 27 in die zwischen der Anschlusslasche 13 und dem Zylinder 5 vorliegende Aufnahme 37 einschieben und in dieser Position durch eine Verdrehbewegung um die Längsachse des Befestigungselements 9 verriegeln, so dass die Anschlagfläche 35 an der Vorspannfläche der Anschlusslasche 13 anliegt. In dieser verriegelten Position kann das Befestigungsmittel in seiner Längsrichtung nicht mehr aus der Durchgangsöffnung 27 gezogen werden.

## Patentansprüche

1. Schwingungsdämpfer (1), umfassend einen äußeren Zylinder (5), an dem auf einer Mantelfläche (10) eine Halterung (3) befestigt ist, wobei die Halterung (3) eine Durchgangsöffnung (27) für ein bolzenförmiges Befestigungsmittel (9) aufweist,
**dadurch gekennzeichnet,**
**dass** sich die Halterung (3) in Umfangsrichtung zur Mantelfläche (19) des Zylinders (5) erstreckt und eine bezogen auf den Zylinder (5) radiale Ausformung (21) aufweist, die mit dem Zylinder (5) eine Aufnahme (37) für eine Anschlagfläche (35) des Befestigungsmittels (9) bildet, wobei die Anschlagfläche (35) in Achsrichtung des Befestigungsmittels (9) an der Halterung (3) anliegt.

2. Schwingungsdämpfer nach Anspruch 1,
**dadurch gekennzeichnet,**
**dass** die Durchgangsöffnung (27) bis zu einer Seitenkante (31) der Halterung (3) als ein Schlitz (29) ausgeführt ist und das Befestigungsmittel (9) von dieser Seitenkante (31) in die Durchgangsöffnung (27) einschiebbar ist.

3. Schwingungsdämpfer nach Anspruch 2,
**dadurch gekennzeichnet,**
**dass** das Befestigungsmittel (9) durch eine Sicherungseinrichtung (11) gegen eine Lösebewegung in Schlitzrichtung gesichert ist.

4. Schwingungsdämpfer nach Anspruch 3,
**dadurch gekennzeichnet,**
**dass** die Sicherungseinrichtung (11) eine Durchgangsöffnung (43) für das Befestigungsmittel (9) aufweist und das Sicherungselement (11) an der Halterung (3) derart befestigt ist, dass die Demontagebewegung aus dem Schlitz (29) der Halterung (3) von der Wandung der Durchgangsöffnung (43) der Sicherungseinrichtung (11) blockiert ist.

5. Schwingungsdämpfer nach Anspruch 4,
**dadurch gekennzeichnet,**
**dass** die Sicherungseinrichtung aus einem Scheibenelement (11) besteht, das mit der Halterung (3) in Eingriff steht.

6. Schwingungsdämpfer nach Anspruch 5,
**dadurch gekennzeichnet,**
**dass** das Scheibenelement (11) zumindest eine Anschlagkante (41a-41c) aufweist, die bei einer Bewegung in Demontagerichtung des Befestigungselements (9) an der Halterung (3) anliegt.

7. Schwingungsdämpfer nach Anspruch 6,
**dadurch gekennzeichnet,**
**dass** das Scheibenelement (11) auf der radialen Ausformung (21) der Halterung (3) anliegt.

8. Schwingungsdämpfer nach Anspruch 1,
**dadurch gekennzeichnet,**
**dass** das Befestigungsmittel (9) ein Verdrehsicherungsprofil aufweist, das in eine Führung (36) der Halterung (3) eingreift.

9. Schwingungsdämpfer nach Anspruch 2,
**dadurch gekennzeichnet,**
**dass** der Schlitz (29) bezogen auf eine Belastungsrichtung F des Befestigungsmittels (9) einen bogenförmigen Verlauf aufweist.

10. Schwingungsdämpfer nach Anspruch 1,
**dadurch gekennzeichnet,**
**dass** die Durchgangsöffnung (19) ein von der Kreisform abweichendes Profil aufweist und die Anschlagfläche (35) eine Begrenzungskontur aufweist, die durch die Durchgangsöffnung (29) in die Aufnahme (37) einführbar und durch eine Verdrehbewegung um die Längsachse des Befestigungselements (9) an der Halterung (3) anlegbar ist.
